# FASCICULE DE BREVET EUROPEEN

(11) **EP 2 951 093 B1**
(45) Date de publication et mention de la délivrance du brevet: **08.06.2016**
(21) Numéro de dépôt: 14704847.4
(22) Date de dépôt: 23.01.2014
(51) Int. Cl.: B64D 41/00

(54) **ARCHITECTURE DE FOURNITURE DE PUISSANCE ELECTRIQUE DE SECOURS À UN AERONEF**
EMERGENCY POWER SUPPLY ARCHITECTURE FOR AN AIRCRAFT
NOTSTROMVERSORGUNGSARCHITEKTUR FÜR EIN LUFTFAHRZEUG

(30) Priorité: 29.01.2013 FR 1350727
(43) Date de publication de la demande: 09.12.2015
(73) Titulaire: Microturbo, 31200 Toulouse (FR)
(72) Inventeur: RIDEAU, Jean-François, F-31170 Tournefeuille (FR)
(74) Mandataire: Regimbeau
(86) Numéro de dépôt international: PCT/FR2014/050135
(87) Numéro de publication internationale: WO 2014/118458

(56) Documents cités:
- FR-A1- 2 898 938
- FR-A1- 2 964 086
- US-B1- 6 283 410

## Description

### DOMAINE DE L'INVENTION

Le domaine de l'invention est celui des architectures de fourniture de puissance de secours dans un aéronef et de leur utilisation lorsque les autres sources de génération de puissance d'un aéronef sont inutilisables.

### ETAT DE LA TECHNIQUE

Les aéronefs sont équipés de plusieurs sources de génération de puissance, parmi lesquelles :
- les moteurs principaux, qui assurent la propulsion de l'aéronef,
- un moteur auxiliaire appelé groupe auxiliaire de puissance ou APU, acronyme anglais de « Auxiliary Power Unit », dont la fonction est de fournir de l'énergie non propulsive (par exemple alimentation électrique, maintien des pressions hydraulique et pneumatique, climatisation) à l'aéronef au sol et éventuellement en vol, lorsque les moteurs principaux ne sont pas en mesure de le faire, ou lorsque l'on souhaite économiser du carburant au sol, et
- une source de puissance électrique de secours, dont la fonction est de fournir l'énergie électrique de secours pour maintenir en fonctionnement les systèmes de vols critiques pour le fonctionnement de l'aéronef en cas de perte des autres sources de génération de puissance. Par exemple la source de puissance électrique de secours comprend un générateur électrique pour alimenter les systèmes de contrôle de vol et les instruments de vol critiques.

Afin de ne pas être sujette aux mêmes pannes que les moteurs principaux et que le groupe auxiliaire de puissance, la source de puissance électrique doit être indépendante et notamment fonctionner à partir d'une source d'énergie autre que le carburant de l'appareil (la panne de carburant étant une panne commune aux deux autres moteurs).

La source de puissance de secours actuellement installée sur les aéronefs est appelée RAT, acronyme anglais de « Ram Air Turbine ». Il s'agit d'une hélice associée à un générateur électrique, qui est déployée par exemple devant le nez de l'appareil en cas de panne générale des moteurs principaux et du moteur auxiliaire APU. Son fonctionnement exploite la vitesse de l'avion qui actionne l'hélice et permet de récupérer l'énergie dynamique du vol.

Du fait qu'il s'agit d'une source de puissance de secours, sa présence est nécessaire, et, bien qu'elle ne soit que rarement utilisée, elle doit être régulièrement contrôlée pour s'assurer de son bon fonctionnement. Cette source impose donc des contraintes de maintenance importantes.

En outre, elle représente une charge conséquente pour l'aéronef. Enfin, elle impose à l'aéronef des contraintes de tenue en vibration induites par son fonctionnement.

Le document FR 2 964 086 décrit une architecture de puissance électrique de secours comprenant une récupération d'air provenant d'une cabine pressurisée et un système de production d'électricité par détente de l'air.

### PRESENTATION DE L'INVENTION

L'invention a pour but de pallier au moins un inconvénient cité ci-avant, en proposant une architecture de fourniture de puissance de secours ne présentant pas les inconvénients de l'architecture RAT.

A cet égard, l'invention a pour objet une architecture de fourniture de puissance électrique de secours à un aéronef selon la revendication 1.

L'invention a également pour objet un aéronef selon la revendication 3.

L'invention porte encore sur un procédé de fourniture de puissance électrique de secours selon la revendication 4.

Avantageusement, mais facultativement, le procédé de fourniture de puissance peut en outre comprendre au moins l'une des caractéristiques suivantes :
- l'étape mise en oeuvre en cas de détection d'un panne moteur de l'aéronef comporte en outre la commande simultanée du débrayage de la boite de transmission du groupe auxiliaire de puissance pour relier l'alternateur dudit groupe à l'arbre rotatif entrainé par la turbine.
- Le procédé est mis en oevre dans un aéronef comportant une architecture de fourniture de puissance électrique de secours comprenant un système de calage variable en entrée de la turbine, configuré pour moduler la puissance de la turbine, et dans lequel la puissance de la turbine est modulée en fonction d'une altitude de l'aéronef.

L'architecture de fourniture de puissance de secours selon l'invention permet d'exploiter d'une énergie disponible à bord d'un aéronef en vol, la pressurisation de l'air contenu dans la cabine.

Cette architecture est intégrée au fuselage de l'avion, elle n'entraine donc pas de problématique d'intégration ou de vibrations. Elle est également plus légère qu'une architecture RAT, et il est plus simple de contrôler son fonctionnement car contrairement à l'architecture RAT elle n'a pas à être déployée à l'extérieur de l'aéronef pour être testée.

Cette architecture de fourniture de puissance de secours est d'autant plus légère et mieux intégrée dans le cas où elle est raccordée à l'alternateur du groupe auxiliaire de puissance APU.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
- la figure 1 représente une architecture de fourniture de puissance de secours dans un aéronef qui ne fait pas partie de l'invention,
- la figure 2 représente une architecture de fourniture de puissance de secours dans un aéronef selon un mode de réalisation de l'invention.
- La figure 3 représente les principales étapes du procédé de fourniture de puissance selon un mode de réalisation de l'invention.

### DESCRIPTION DETAILLEE D'AU MOINS UN MODE DE REALISATION

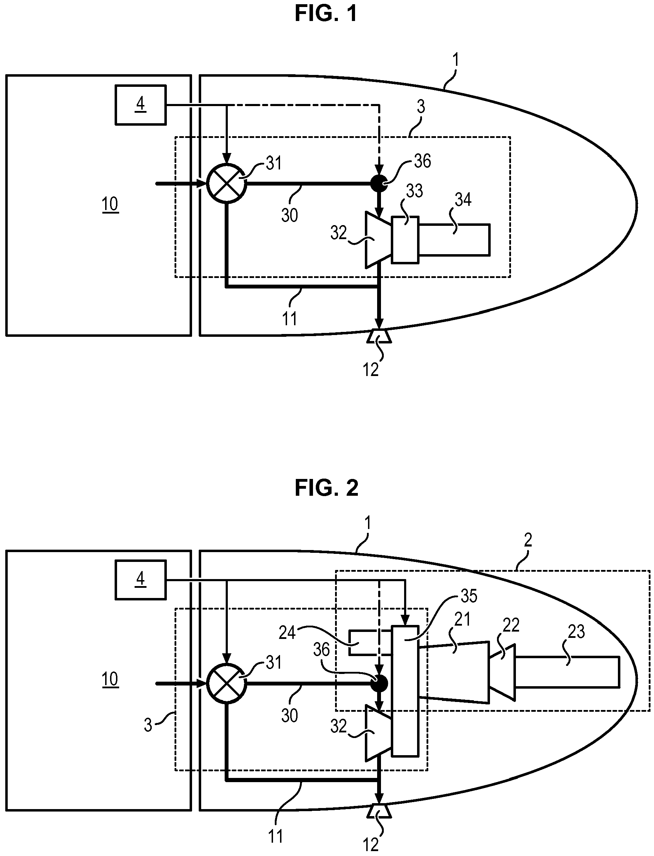

On a représenté schématiquement en figures 1 et 2 une vue partielle d'un aéronef, qui comprend des moteurs principaux assurant sa propulsion (non représentés), un groupe auxiliaire de puissance APU 2 (représenté en figure 2), et une architecture de fourniture de puissance électrique de secours 3. Comme illustré sur les figures, l'architecture de fourniture de puissance électrique de secours est installée dans un compartiment de l'aéronef.

Comme indiqué ci-avant, le groupe auxiliaire de puissance APU 2 est configuré pour fournir de l'énergie électrique non propulsive, c'est-à-dire consacrée aux systèmes de vol tels que l'alimentation électrique, la pression hydraulique et pneumatique des équipements ou encore la climatisation. Ce groupe peut être utilisé au sol ou en vol, et avantageusement en complément des moteurs principaux.

L'architecture de fourniture de puissance électrique de secours est de moindres dimensions que le groupe auxiliaire de puissance APU car elle n'est configurée que pour alimenter les systèmes critiques de vol, uniquement lorsque les moteurs principaux et le groupe auxiliaire de puissance APU ne sont pas en état de fonctionnement. Elle est, de ce fait, dimensionnée pour fournir entre 10 et 20% de la puissance nominale des moteurs principaux et est totalement indépendante du reste du système (notamment elle n'a pas la même source d'énergie que les autres moyens de fourniture de puissance).

L'aéronef comporte également une cabine pressurisée 10, par exemple une cabine de passagers, ainsi qu'un circuit d'évacuation 11 vers l'extérieur de l'aéronef de l'air contenu dans la cabine. Par cabine pressurisée, on entend une cabine dont l'air qu'elle contient est pressurisé par rapport à l'air extérieur à l'aéronef, notamment quand l'aéronef est en vol.

Ce circuit permet le renouvellement de l'air contenu dans la cabine. Il comporte notamment une valve 12 d'évacuation de l'air vers l'extérieur dans laquelle circule un débit d'air prédéterminé pour permettre ledit renouvellement.

L'architecture de fourniture de puissance électrique de secours comprend un circuit 30 de récupération d'air pressurisé de la cabine, qui est raccordé au circuit d'évacuation 11 de l'air vers l'extérieur par une vanne de répartition 31. Ce circuit permet de prélever, en modulant l'ouverture de la vanne de répartition 31, une proportion d'air déterminé dans le flux d'air évacué vers l'extérieur.

A cet égard, la vanne est pilotée par une commande 4, qui est préférablement une commande électronique automatique. La vanne de répartition 31 est avantageusement adaptée pour adopter au moins deux configurations, pour moduler la quantité d'air prélevée dans le circuit de récupération, depuis une première configuration où la totalité du débit d'air dans le circuit d'évacuation est évacuée vers l'extérieur, jusqu'à une deuxième configuration où la totalité du débit d'air dans le circuit de d'évacuation est prélevée par le circuit de récupération.

L'architecture de fourniture de puissance électrique de secours comprend en outre un système de production d'électricité à partir de l'air récupéré de la cabine pressurisée. Ce système comprend une turbine 32, qui peut être une turbine radiale ou une turbine axiale, une boîte de réduction 33 et un alternateur 34. Quand la turbine est alimentée en air provenant de la cabine, elle entraîne en rotation un arbre rotatif (non représenté) qui entraîne l'alternateur via la boite de réduction.

L'air récupéré de la cabine pressurisée est détendu dans la turbine pour atteindre la pression de l'air ambiant à l'extérieur de l'avion, est ensuite rejeté dans l'atmosphère via la valve d'évacuation 12.

Ainsi, à titre d'exemple non limitatif, pour un avion en vol à une altitude de l'ordre de 12000 mètres, l'air dans la cabine est pressurisé à environ 0,8 bar, tandis que la pression de l'air à l'extérieur de l'avion est de 0,2 bar. Si le circuit d'évacuation 11 rejette une quantité 0.6 kg/s d'air pour renouveler l'air dans la cabine, l'architecture de fourniture de puissance électrique de secours peut créer jusqu'à 40kW.

Selon un mode de réalisation de l'invention, représenté en figure 2, l'architecture de fourniture de puissance électrique de secours est raccordée au groupe auxiliaire de puissance APU 2. Celui-ci comprend, de façon connue en soi, une turbine d'entraînement d'un compresseur d'air, via un arbre de transmission, représentés schématiquement sur la figure sous la référence 21, et une tuyère 22 d'éjection et un conduit d'échappement des gaz 23.

Sur l'arbre de transmission du groupe auxiliaire de puissance 2 est également monté un alternateur 24, qui génère de l'électricité pour d'autres dispositifs consommateurs d'énergie de l'aéronef (non représentés) tel que par exemple les systèmes de pressurisation, de conditionnement d'air cabine, le réseau électrique, le circuit hydraulique, les systèmes de vol etc, ou encore un système d'huile refroidissant l'alternateur.

Dans ce mode de réalisation, en cas d'utilisation de l'architecture de fourniture de puissance de secours, la turbine 32 de l'architecture entraîne l'alternateur 24 du groupe auxiliaire de puissance 2. L'architecture 2 comprend alors une boîte de transmission débrayable 35 qui est configurée pour sélectivement relier l'alternateur 24 à l'arbre de transmission du groupe auxiliaire de puissance 21 ou à l'arbre rotatif entraîné par la turbine 32.

Avantageusement, cette boîte de transmission 35 est commandée par la même commande 4 que la vanne de répartition 31, car alors, en cas d'activation de l'architecture de fourniture de puissance de secours, la commande 4 fait simultanément commuter la vanne 31 pour qu'un débit d'air soit récupéré par le circuit 30, et commuter la boîte de transmission 35 pour relier la turbine 32 à l'alternateur 24 du groupe auxiliaire de puissance APU.

En outre, avantageusement, quel que soit le mode de réalisation de l'architecture, celle-ci comporte en outre un système de calage variable 36 en entrée de la turbine 32 permettant de moduler la puissance de la turbine en adaptant sa section de passage, et de fait son débit, le taux de détente étant quant à lui imposé par la différence de pression entre la cabine et l'atmosphère extérieure à l'aéronef. Cette modulation permet de garantir que la turbine fonctionne à son optimum de rendement.

Ainsi, comme l'architecture est un système de secours, au cours de son utilisation, l'aéronef est nécessairement en phase de descente afin d'atterrir. L'énergie récupérable par l'architecture va donc diminuer progressivement à mesure que l'aéronef perd de l'altitude. Le système de calage variable permet notamment de fournir une puissance plus importante à basse altitude en augmentant le débit d'air détendu par la turbine.

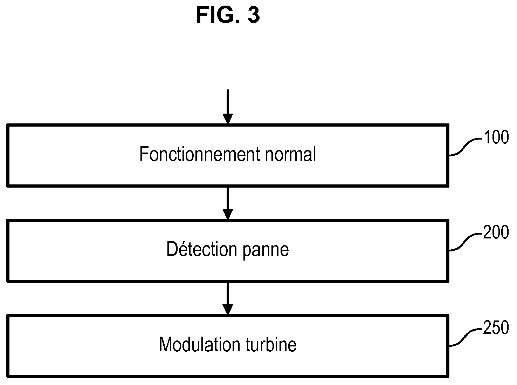

Un aéronef muni d'une telle architecture de fourniture de puissance de secours fonctionne donc de la façon suivante, en référence à la figure 3 :
- En cas de fonctionnement normal 100, les moteurs principaux fonctionnent, et le groupe auxiliaire de puissance peut éventuellement générer de l'énergie non propulsive. La vanne de répartition 31 est dans la première configuration où le circuit de récupération 30 ne prélève pas d'air, et la boîte de transmission 35 est dans une position où la turbine du groupe APU entraîne en rotation l'alternateur 24.
- En cas de détection d'un dysfonctionnement tel qu'une panne moteur 200, la commande 4 bascule la configuration de la vanne 31 pour que le circuit de récupération 30 prélève une quantité d'air et alimente la turbine 32. Simultanément, ou après un court laps de temps, la commande 4 déclenche le débrayage de la boîte de transmission 35 pour que la turbine 32 entraîne l'alternateur 24 du groupe APU.
- Enfin, au cours de la descente de l'aéronef, 250, la puissance de la turbine est modulée en faisant varier son débit par le système à calage variable 36, pouvant être lui-même commandé par la commande 4.

On a ainsi proposé une architecture de puissance de secours qui est intégrée dans un aéronef, et dont le fonctionnement ainsi que le contrôle ne nécessite pas un déploiement à l'extérieur de l'aéronef. Son possible couplage avec le groupe auxiliaire de puissance APU rend l'ensemble mieux intégré et plus léger.

## Revendications

1. Architecture (3) de fourniture de puissance électrique de secours à un aéronef (1) comprenant une cabine pressurisée (10), au moins un moteur principal, un groupe auxiliaire de puissance APU (2) comprenant un alternateur (24), et un circuit d'évacuation (11) vers l'extérieur d'air provenant de la cabine, ladite architecture étant adaptée pour fournir une puissance électrique à l'aéronef en cas de panne du moteur principal et du groupe auxiliaire de secours, et comprenant :
- un circuit de récupération d'air (30) provenant de la cabine,
- une vanne (31) de répartition de l'air pour raccorder le circuit de récupération d'air (30) au circuit d'évacuation (11),
- une commande (4) de ladite vanne pour moduler le débit d'air dans le circuit de récupération (30),
- un système de production d'électricité (32, 24, 34) par détente de l'air récupéré de la cabine, ledit système comportant une turbine (32) alimentée en air récupéré de la cabine, un arbre rotatif entrainé par la turbine, et
- une boite de transmission débrayable (35) adaptée pour sélectivement relier l'alternateur (24) à un arbre moteur du groupe auxiliaire de puissance (2) ou à l'arbre rotatif entrainé par la turbine (32)
l'architecture étant **caractérisée en ce que** la commande (4) de la vanne est en outre configurée pour commander le débrayage de la boite de transmission (35).

2. Architecture (3) selon la revendication précédente, comprenant en outre un système de calage variable (36) en entrée de la turbine (32), configuré pour moduler la puissance de la turbine.

3. Aéronef (1), comportant une cabine pressurisée (10), au moins un moteur principal, un groupe auxiliaire de puissance APU (2), et un circuit d'évacuation (11) vers l'extérieur d'air provenant de la cabine,, **caractérisé en ce qu'**il comporte en outre une architecture (3) de fourniture de puissance électrique de secours selon l'une des revendications précédentes.

4. Procédé de fourniture de puissance électrique de secours dans un aéronef (1) selon la revendication 3, le procédé comprenant les étapes consistant à :
- en fonctionnement normal (100) de l'aéronef (1), piloter la vanne de répartition (31) selon une première configuration telle que l'intégralité de l'air récupéré de la cabine pressurisée est évacué vers l'extérieur, et
- en cas de détection d'une panne moteur (200) de l'aéronef (1), commander la vanne de répartition (31) pour adopter une seconde configuration dans laquelle au moins une partie de l'air récupéré de la cabine pressurisée (10) est dirigé dans le circuit de récupération (30) pour alimenter le système de production électrique.

5. Procédé selon la revendication précédente, dans lequel l'étape mise en oeuvre en cas de détection d'un panne moteur de l'aéronef comporte en outre la commande simultanée du débrayage de la boite de transmission (35) du groupe auxiliaire de puissance (2) pour relier l'alternateur (24) dudit groupe à l'arbre rotatif entrainé par la turbine (32).

6. Procédé selon l'une des revendications 4 ou 5, mis en oeuvre dans un aéronef (1) comportant une architecture (3) de fourniture de puissance électrique de secours selon la revendication 2, dans lequel la puissance de la turbine est modulée (250) en fonction d'une altitude de l'aéronef (1).

## Patentansprüche

1. Notstromversorgungsarchitektur (3) für ein Luftfahrzeug (1), umfassend eine Druckkabine (10), mindestens einen Hauptmotor, ein Hilfstriebwerk APU (2), umfassend einen Wechselstromgenerator (24), und einen Ableitungskreis (11) von Luft, die aus der Kabine kommt, nach außen, wobei die Architektur angepasst ist, um dem Luftfahrzeug im Fall des Ausfalls des Hauptmotors und des Hilfstriebswerks eine elektrische Leistung zu liefern, umfassend:
- einen Rückgewinnungskreis von Luft (30) aus der Kabine,
- ein Luftverteilungsventil (31), um den Luftrückgewinnungskreis (30) mit dem Ableitungskreis (11) zu verbinden,
- eine Steuerung (4) des Ventils zur Modulierung des Luftdurchsatzes im Rückgewinnungskreis (30),
- ein Stromproduktionssystem (32, 24, 34) durch Entspannung der zurückgewonnenen Kabinenluft, wobei das System eine mit zurückgewonnener Kabinenluft versorgte Turbine (32), eine von der Turbine angetriebene rotierende Welle aufweist, und
- ein ausrückbares Getriebe (35), das imstande ist, den Wechselstromgenerator (24) selektiv mit einer Motorwelle des Hilfstriebwerks (2) oder mit der von der Turbine (32) angetriebenen rotierenden Welle zu verbinden,
wobei die Architektur **dadurch gekennzeichnet ist, dass** die Steuerung (4) des Ventils ferner zur Steuerung des Ausrückens des Getriebes (35) konfiguriert ist.

2. Architektur (3) nach vorangehendem Anspruch, umfassend ferner ein variables Einstellungssystem (36) am Eingang der Turbine (32), das konfiguriert ist, um die Leistung der Turbine zu modulieren.

3. Luftfahrzeug (1), umfassend eine Druckkabine (10), mindestens einen Hauptmotor, ein Hilfstriebwerk APU (2) und einen Ableitungskreis (11) von Luft, die aus der Kabine kommt, nach außen, **dadurch gekennzeichnet, dass** es ferner eine Notstromversorgungsarchitektur (3) nach einem der vorangehenden Ansprüche aufweist.

4. Verfahren zur Bereitstellung von Notstrom in einem Luftfahrzeug (1) nach Anspruch 3, wobei das Verfahren die folgenden Schritte umfasst:
- im normalen Betrieb (100) des Luftfahrzeugs (1), Steuern des Verteilungsventils (31) gemäß einer ersten Konfiguration, so dass die gesamte, aus der Druckkabine zurückgewonnene Luft nach außen abgeleitet wird, und
- bei Feststellung einer Motorpanne (200) des Luftfahrzeugs (1), Steuern des Verteilungsventils (31), um eine zweite Konfiguration einzunehmen, in welcher mindestens ein Teil der aus der Druckkabine (10) zurückgewonnenen Luft in den Rückgewinnungskreis (30) gelenkt wird, um das Stromproduktionssystem zu versorgen.

5. Verfahren nach vorangehendem Anspruch, wobei der Umsetzungsschritt bei Feststellung einer Motorpanne des Luftfahrzeugs ferner die gleichzeitige Steuerung des Ausrückens des Getriebes (35) des Hilfstriebwerks (2) aufweist, um den Wechselstromgenerator (24) des Triebwerks mit der von der Turbine (32) angetriebenen rotierenden Welle zu verbinden.

6. Verfahren nach einem der Ansprüche 4 oder 5, umgesetzt in einem Luftfahrzeug (1), das eine Notstromversorgungsarchitektur (3) nach Anspruch 2 aufweist, wobei die Leistung der Turbine in Abhängigkeit von einer Höhe des Luftfahrzeugs (1) moduliert (250) wird.

## Claims

1. An architecture (3) for supplying emergency electrical power to an aircraft (1) including a pressurized cabin (10), at least one main engine, an auxiliary power unit APU (2) including an alternator (24) and a circuit (11) for exhausting air from the cabin to the outside, said architecture being designed to supply electrical power to the aircraft in the event of a breakdown of the main engine and the emergency auxiliary unit, and including:
- a circuit (30) for recovering air coming from the cabin,
- an air distributing valve (31) to connect the air recovery circuit (30) to the evacuation circuit (11),
- a control (4) for said valve to modulate the flow of air in the recovery circuit (30),
- a system for producing electricity (32, 24, 34) by expansion of the air recovered from the cabin, said system including a turbine (32) supplied with air recovered from the cabin, a rotating shaft driven by the turbine, and
- a shiftable transmission gearbox (35) designed to selectively connect the alternator (24) to a drive shaft of the auxiliary power unit (2) or to the rotating shaft driven by the turbine (32)
the architecture being **characterized in that** the control (4) of the valve is further configured to control the disengagement of the transmission gearbox (35).

2. The architecture (3) according to the preceding claim, further including a variable timing system (36) at the input to the turbine (32) configured to modulate the power of the turbine.

3. An aircraft (1), comprising a pressurized cabin (10), at least one main engine, an auxiliary power unit APU (2), and a circuit (11) for exhausting air from the cabin to the outside **characterized in that** it further comprises an architecture (3) for supplying emergency electrical power according to one of the preceding claims.

4. A method for supplying emergency electrical power in an aircraft (1) according to claim 3, the method including steps consisting of:
- during normal operation (100) of the aircraft (1), controlling the distribution valve (31) in a first configuration such that all the air recovered from the pressurized cabin is exhausted to the outside, and
- in the event of detection of an engine breakdown (200) of the aircraft (1), control the distribution valve (31) to assume a second configuration wherein at least a part of the air recovered from the pressurized cabin (10) is directed into the recovery circuit (30) to supply the electrical power production system.

5. The method according to the preceding claim, wherein the implementing step in the event of detection of an engine breakdown of the aircraft further includes the simultaneous control of the disengagement of the transmission gearbox (35) from the auxiliary power unit (2) to connect the alternator (24) of said unit to the rotating shaft driven by the turbine (32).

6. The method according to one of claims 4 or 5, implemented in an aircraft (1) comprising an architecture (3) for supplying emergency electrical power according to claim 2, wherein the power of the turbine is modulated (250) depending on the altitude of the aircraft (1).
